# FASCICULE DE BREVET EUROPEEN

(11) **EP 2 315 694 B1**
(45) Date de publication et mention de la délivrance du brevet: **05.09.2012**
(21) Numéro de dépôt: 09737064.7
(22) Date de dépôt: 16.07.2009
(51) Int. Cl.: B62D 27/02, B62D 25/16, B62D 21/15, B62D 25/08

(54) **ELEMENT DE CARROSSERIE AVEC MOYENS DE LIMITATION DU RECUL DE CET ELEMENT LORS D'UN CHOC SUR CELUI-CI**
KAROSSERIEELEMENT MIT MITTELN ZUR BEGRENZUNG DES RÜCKSTOSSES DIESES ELEMENTS BEI EINEM AUFPRALL DARAUF
BODYWORK ELEMENT WITH MEANS OF LIMITING THE INTRUSION OF THIS ELEMENT IN THE EVENT OF AN IMPACT THEREWITH

(30) Priorité: 22.07.2008 FR 0854956
(43) Date de publication de la demande: 04.05.2011
(73) Titulaire: Peugeot Citroën Automobiles Société Anonyme, 78140 Vélizy Villacoublay (FR)
(72) Inventeur: COIFFIER, Frédéric, 91310 Leuville sur Orge (FR)
(74) Mandataire: Fosse, Danièle
(86) Numéro de dépôt international: PCT/FR2009/051410
(87) Numéro de publication internationale: WO 2010/010276

(56) Documents cités:
- EP-A- 1 655 210
- DE-A1- 10 340 955
- JP-A- 3 132 481
- US-A- 5 906 410

## Description

La présente invention concerne un élément de carrosserie avec des moyens de limitation du recul de cet élément lors d'un choc sur celui-ci.

De nouvelles réglementations ont été définies en ce qui concerne le comportement des éléments de carrosserie lors d'un choc, et de nouvelles procédures d'essais ont été mises en place pour évaluer le comportement des éléments de carrosserie lors d'un choc normalisé. Ces essais concernent en particulier le choc dit de réparabilité.

L'essai réparabilité permet d'estimer le coût des réparations sur un véhicule testé, notamment lorsqu'il percute un obstacle rigide à une vitesse de 15km/h, des essais simulant également les chocs occasionnés en stationnement à 4 km/h en Europe (ou 8 km/h aux USA et Canada). De tels chocs contre un obstacle rigide lors d'essais de réparabilité occasionnent des dégâts matériels non négligeables et les réponses d'un type de véhicule aux essais réparabilité sont des critères pris en considération par les assureurs pour déterminer le calcul de la prime d'assurance pour ce type de véhicule.

Ces essais concernent, en général mais de manière non exclusive, la partie avant d'un véhicule et notamment le pare-choc et les ailes du véhicule.

Dans ce qui va suivre, l'invention va être décrite en relation avec une aile avant d'un véhicule automobile mais la présente invention peut s'appliquer à d'autres éléments de la carrosserie, aussi bien à l'avant qu'à l'arrière du véhicule.

Une aile avant de véhicule est fixée sur d'autres éléments environnants de la carrosserie par des points de fixation à l'avant et à l'arrière de cette aile. En général, cinq points de fixation peuvent être prévus, principalement sous la forme de pattes de fixation, dont, par exemple, une est prévue vers l'extrémité avant de l'aile, une autre à la partie supérieure de l'aile et trois à l'extrémité arrière de celle-ci.

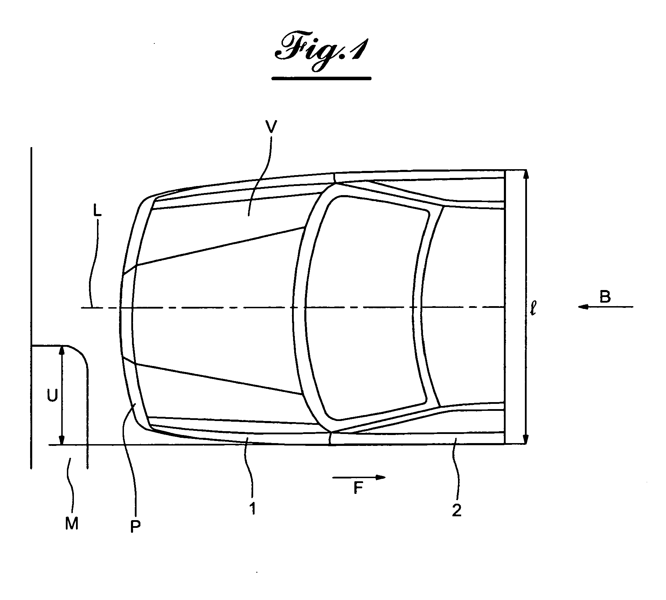

La figure 1 montre une vue de dessus d'un véhicule automobile V lors d'un essai de choc réparabilité sur son aile gauche A. Ces chocs réparabilité peuvent concerner divers éléments de la carrosserie du véhicule et sont adaptés en conséquence. Par exemple, pour un choc réparabilité aile avant, le mur d'impact M est de largeur U, inférieure à la distance 1/2 entre l'aile A du véhicule et l'axe médian longitudinal L du véhicule, afin que seule la partie latérale gauche du véhicule, c'est-à-dire essentiellement la partie gauche du pare-choc P et l'aile avant gauche A, soit sollicitée. Le véhicule est dirigé selon la flèche B à une vitesse prédéterminée, de préférence 15km/h, contre le mur d'impact U, lui-même renforcé par une barrière fixe sur sa face arrière.

Lors de tels essais de choc réparabilité, il a été déterminé que ces points de fixation de l'aile, utilisés classiquement, ne permettent pas de contenir le recul de l'aile lors de ce choc. L'aile avant gauche A subit un recul selon la flèche R et déforme la porte avant gauche D.

En effet dans le cas des cinq pattes de fixation, notamment avec une à l'avant et trois à l'arrière, les trois points de fixation arrière sont inefficaces pour traiter ce type de choc réparabilité, tandis qu'une fixation avant est directement impactée pendant le choc et peut être alors fortement endommagée. De ce fait, la fixation restante, en partie supérieure de l'aile, n'est pas suffisante pour permettre d'éviter le recul de l'aile en choc réparabilité avant latéral.

Le recul de l'aile occasionne la transmission du choc au côté latéral correspondant du véhicule ce qui peut provoquer l'endommagement de la porte avant. Cela fait perdre des classes d'assurance au véhicule concerné et se traduit par une augmentation de la prime d'assurance pour ce véhicule.

Le document FR-A-2 895 962 décrit une pièce de support de fixation d'un élément de carrosserie à une caisse de véhicule, cette pièce comprenant un corps de fixation, une partie de liaison à l'élément de carrosserie et au moins un lien frangible reliant le corps de fixation à la partie de liaison. Des moyens complémentaires de guidage de la partie de liaison sont prévus après rupture du lien frangible. Ce document n'évoque pas le problème du recul d'un élément de carrosserie lors d'un choc mais a trait à la rupture d'un lien frangible suite à un choc de faible ampleur, du type piéton, et au guidage de l'élément de carrosserie pour l'empêcher de frotter contre d'autres éléments du véhicule et non pour limiter son recul pouvant endommager fortement d'autres pièces de la carrosserie.

Le document JP03132481 propose que la partie de montage supérieure d'une aile de véhicule comporte une partie arrière formant flasque venant en butée contre une extrémité avant de la partie de montage de l'articulation du capot de manière à empêcher un mouvement arrière de l'aile en cas de choc avant léger. Ce document décrit un élément de carosserie d'un véhicule automobile conformément au préambule de la revendication 1.

Le document US 5 906 410 propose un dispositif de fixation entre deux éléments de carrosserie dont le dispositif d'ancrage est conçu de manière à permettre d'absorber de l'énergie en cas de collision pour limiter ainsi le déplacement des pièces.

Le but de la présente invention est de permettre à des éléments de carrosserie d'un véhicule automobile, lors de chocs du type réparabilité, de ne pas subir de déformations prononcées et notamment un recul trop important dans la direction de la force d'impact.

A cet effet, l'invention a pour objet un élément de carrosserie d'un véhicule automobile, relié à ladite carrosserie par au moins un point de fixation, caractérisé en ce qu'il comprend des moyens de limitation du recul de cet élément quand celui-ci est soumis à un choc dont la force d'impact est orientée sensiblement parallèlement à l'axe longitudinal du véhicule.

Selon des caractéristiques additionnelles de la présente invention :
- quand l'élément comprend un point de fixation, disposé sur sa partie soumise en premier à l'impact lors du choc, les moyens de limitation du recul sont sous la forme d'une structure de rigidification de ce point de fixation et/ou d'au moins un point de fixation additionnel associé à ce point de fixation et, quand il ne comprend pas de point de fixation disposé sur sa partie soumise en premier à l'impact lors du choc, les moyens de limitation du recul sont sous la forme d'au moins un point de fixation disposé sur cette partie, ce point de fixation présentant une structure de rigidification,
- les moyens de limitation du recul de l'élément sont sous la forme d'au moins un moyen de fixation supplémentaire disposé en zone hors choc de l'élément et sollicité en cisaillement lors du choc,
- le moyen de fixation supplémentaire ou au moins un des moyens de fixation supplémentaires est disposé sur une partie longitudinale dudit élément, cette partie s'étendant entre l'avant et l'arrière de celui-ci,
- le moyen de fixation supplémentaire ou au moins un des moyens de fixation supplémentaires est disposé sur le bord longitudinal supérieur dudit élément,
- le moyen de fixation supplémentaire ou au moins un des moyens de fixation supplémentaires est disposé sur la partie d'un bord longitudinal dudit élément, cette partie étant éloignée de la zone d'impact,
- le moyen de fixation supplémentaire ou au moins un des moyens de fixation supplémentaires comprend un support de fixation, recevant des pièces de fixation, du type vis ou rivets et reliant ledit élément avec un élément environnant de la carrosserie, ces pièces de fixation pouvant résister à des efforts de l'ordre de 2.000 N,
- le support de fixation est essentiellement en forme d'équerre, chaque branche de l'équerre étant appliquée respectivement contre la partie supérieure et la partie latérale d'un élément environnant solidaire de la carrosserie,
- l'élément de carrosserie est une aile d'un véhicule automobile,
- le moyen de fixation supplémentaire ou au moins un des moyens de fixation supplémentaires relie cette aile avec sa doublure d'aile associée, cette dernière formant l'élément environnant solidaire de la carrosserie,
- ladite aile est une aile avant de véhicule automobile, au moins le moyen de fixation supplémentaire ou au moins un des moyens de fixation supplémentaires étant disposé sur son bord longitudinal supérieur en dessous du fenestron de la porte avant correspondante du véhicule automobile.

L'effet technique obtenu est une limitation du recul due, soit à la résistance accrue d'au moins un point de fixation de l'élément, soit à l'ajout d'au moins un point de fixation renforçant la tenue en position de l'élément.

L'invention va maintenant être décrite plus en détail mais de façon non limitative en regard des figures annexées, dans lesquelles :
- la figure 1 est une représentation schématique d'une vue de dessus d'un véhicule automobile lors d'un essai de choc réparabilité,
- la figure 2 est une représentation schématique d'un côté latéral avant d'un véhicule avec une aile comprenant les moyens de limitation du recul de celle-ci conformément à l'invention,
- la figure 3 est une représentation schématique d'une vue agrandie d'une partie d'aile disposée sous le fenestron d'une porte avant, cette partie d'aile comprenant les moyens de limitation du recul de celle-ci conformément à un mode de réalisation de l'invention.

La figure 1 a déjà été décrite dans la partie introductive de la présente description.

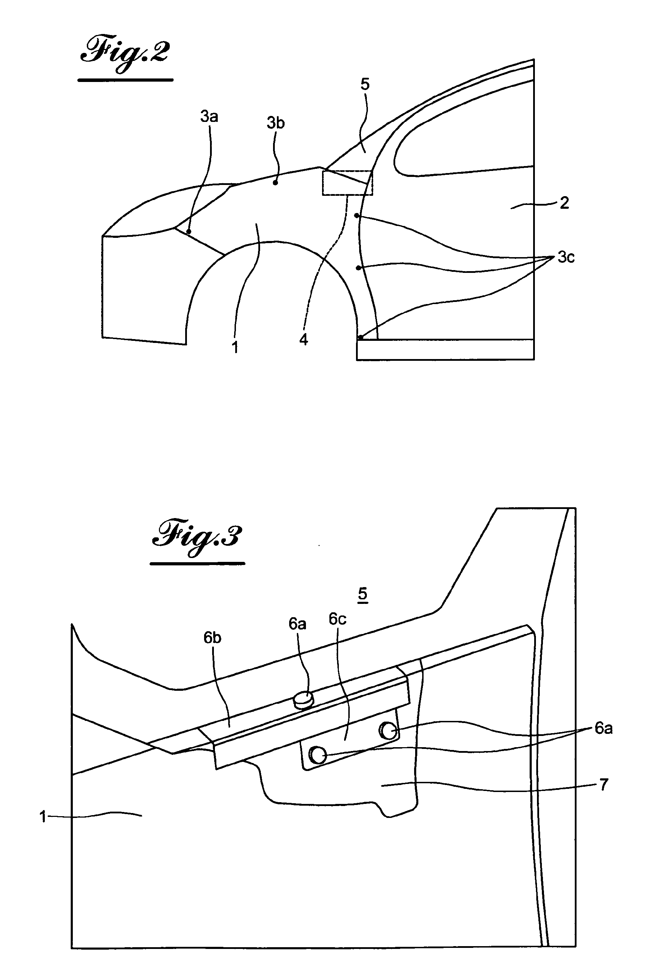

La figure 2 est une représentation schématique d'un côté latéral avant d'un véhicule avec une aile comprenant les moyens de limitation du recul de celle-ci conformément à l'invention.

L'aile avant 1, illustrant un élément de carrosserie selon la présente invention, est fixée à des éléments environnants de ladite carrosserie par un point de fixation avant 3a, un point de fixation supérieur 3b, disposé sensiblement sur le côté longitudinal de l'aile 1 s'étendant de l'avant vers l'arrière de celle-ci et trois points de fixation arrière 3c.

Le point de fixation avant 3a relie l'aile 1 au pare-choc, les autres points 3b et 3c reliant cette aile à la doublure d'aile.

Ces points de fixation 3a, 3b et 3c sont sous la forme de pattes, ce qui ne leur permet pas de subir des forces d'impact élevées sans déformation.

Les essais de réparabilité pratiqués sur cette aile ont montré que celle-ci subit un recul vers la porte 2, qui endommage celle-ci.

En choc réparabilité, la patte avant 3a de l'aile 1, qui assure la fixation de l'aile avec le pare-choc avant, recule sous la poussée de la force d'impact. Ce choc induit aussi un recul du pare-choc ce qui engendre un recul de l'aile 1 de sa partie inférieure jusqu'à sa partie arrière. Ce recul de la patte avant 3a ne peut être compensé par les trois pattes arrière 3c. La patte intermédiaire longitudinale 3b ne peut pas assurer une limitation efficace de ce recul de l'aile 1.

Afin de limiter le recul de l'aile avant 1 vers la porte avant 2 associé, l'élément de carrosserie d'un véhicule automobile, ici sous la forme de l'aile 1, relié à ladite carrosserie par au moins un point de fixation, ici cinq points de fixation 3a, 3b et 3c, est caractérisé en ce qu'il comprend des moyens de limitation du recul de cet élément quand celui-ci est soumis à un choc dont la force d'impact est orientée sensiblement parallèle à l'axe longitudinal du véhicule.

Dans un premier mode de réalisation de l'invention, en complément du premier point de fixation avant 3a, l'aile comprend au moins un point de fixation additionnel, non montré aux figures, disposé sur sa partie impactée lors du choc, formant les moyens de limitation du recul en renforçant ce premier point de fixation 3a. En alternative ou en complément, les moyens de limitation du recul sont sous la forme d'une structure de rigidification du premier point de fixation et/ou du point de fixation additionnel associé à ce premier point de fixation, comme mentionné précédemment.

Ainsi la déformation du point de fixation à l'avant de l'aile est moins grande, ce qui limite la déformation de l'aile vers l'arrière. Comme exemple de structure de rigidification, la patte de fixation peut être plus épaisse ou plus résistante à la déformation, faite par exemple d'un matériau résistant particulièrement bien à la déformation.

Dans le cas d'ajout d'un point de fixation additionnel, ce point peut être sous la forme d'une patte de fixation ou d'un point de fixation sous une autre forme, à proximité du premier point de fixation avant 3a. Avantageusement, ce point de fixation additionnel peut aussi comporter une structure de rigidification.

Dans un second mode de réalisation, second mode qui est le mode préféré de réalisation de la présente invention, les moyens de limitation du recul de l'élément de carrosserie sont sous la forme d'au moins un moyen de fixation supplémentaire, disposé en zone hors choc de l'élément et sollicité en cisaillement lors du choc.

A la figure 2, le ou au moins un de ces moyens de fixation supplémentaires est disposé dans la partie entourée référencée 4. Cette partie 4 se trouve, avantageusement, sous le fenestron 5 de la porte avant 2.

Le moyen de fixation supplémentaire peut être fixé à différents emplacements, compte tenu de l'élément de carrosserie dont le recul doit être limité.

Avantageusement, au moins un des moyens de fixation supplémentaires est disposé dans une partie longitudinale dudit élément, s'étendant entre l'avant et l'arrière de celui-ci.

Avantageusement, au moins un des moyens de fixation supplémentaires est disposé dans une partie d'un bord longitudinal dudit élément se trouvant éloignée de la zone d'impact.

Dans le cas de l'aile avant, cette partie est la partie entourée référencée 4 qui se trouve dans la partie longitudinale supérieure de l'aile avant 1. Cette partie se trouve bien à l'arrière de la partie supérieure de l'aile avant 1, donc opposée au choc se produisant sur la partie présentant le point de fixation avant 3a près du pare-choc.

La figure 3 est une représentation schématique d'une vue agrandie d'une partie d'aile 1 disposée sous le fenestron 5 d'une porte avant, cette partie d'aile 1 comprenant les moyens de limitation du recul 6, 6a de celle-ci, conformément à une forme de réalisation du second mode de l'invention.

A cette figure, les moyens de limitation du recul 6, 6a sont sous la forme d'un moyen de fixation supplémentaire comprenant un support 6 de fixation, muni de pièces de fixation 6a, du type vis ou rivets et reliant l'aile avant 1 avec la doublure 7 d'aile avant, cette dernière formant l'élément environnant de la carrosserie.

Les vis et rivets 6a sont, avantageusement, conformés pour résister à des efforts de cisaillement, exercés sur eux lors d'un choc, qui peuvent être de l'ordre de 2.000 N, sans que cela soit limitatif.

Ce support 6 de fixation est préférentiellement rigide. Avantageusement, le support 6 de fixation peut être sous la forme d'une équerre avec une branche 6b et une branche 6c appliquées respectivement sur une partie supérieure et une partie latérale et de la doublure 7 de l'aile avant, cette doublure 7 formant l'élément environnant de la carrosserie.

Comme précédemment mentionné, le moyen de fixation supplémentaire 6, 6a est positionné sous le fenestron 5 de la porte avant du véhicule et sensiblement dans sa partie médiane.

Un tel moyen de fixation supplémentaire 6, 6a en partie supérieure de l'aile 1, avantageusement sous le fenestron 5, permet de limiter le recul de l'aile avant dans sa partie supérieure, afin que celle-ci n'impacte plus la porte avant. Le recul de l'aile avant 1 est ainsi maîtrisé.

La présente invention est applicable à tout élément de carrosserie risquant lors d'un impact d'avoir un mouvement pouvant endommager un autre élément du véhicule.

Elle est applicable préférentiellement pour les ailes avant et arrière lors, respectivement, d'un choc avant ou arrière mais peut être appliquée à d'autres éléments de la carrosserie du véhicule comme le capot, le coffre arrière ou les portes latérales du véhicule.

L'avantage majeur de la présente invention permet par la limitation du recul d'un élément de carrosserie de protéger un autre élément de celle-ci, ce qui constitue un gain de classe d'assurance en réparabilité.

Le redressage de l'élément susceptible d'être endommagé par un tel recul est ainsi évité ainsi que les retouches de peinture consécutives.

La solution technique proposée est relativement simple et représente un gain économique par rapport à d'autres solutions techniques possibles, par exemple l'utilisation d'absorbeurs de tout type.

## Revendications

1. Elément de carrosserie (1) d'un véhicule automobile, relié à ladite carrosserie par au moins un point de fixation (3a, 3b ou 3c), comprenant des moyens de limitation (6, 6a) du recul de cet élément (1) quand celui-ci est soumis à un choc dont la force d'impact est orientée sensiblement parallèlement à l'axe longitudinal du véhicule, lesdits moyens (6, 6a) étant sous la forme d'au moins un moyen de fixation supplémentaire (6) disposé en zone hors choc de l'élément (1) et sollicité en cisaillement lors du choc, ledit moyen de fixation supplémentaire (6) ou au moins un des moyens de fixation supplémentaires comprend un support (6) de fixation, recevant des pièces de fixation (6a), du type vis ou rivets et reliant ledit élément avec un élément environnant de la carrosserie, **caractérisé en ce que** ces pièces de fixation (6a) peuvent résister à des efforts de l'ordre de 2.000 N, et **en ce que** le support (6) de fixation est essentiellement en forme d'équerre, chaque branche de l'équerre (6b ou 6c) étant appliquée respectivement contre la partie supérieure et la partie latérale d'un élément environnant (7) solidaire de la carrosserie.

2. Elément de carrosserie (1) selon la revendication 1, **caractérisé en ce que**, quand il comprend un point de fixation (3a), disposé sur sa partie soumise en premier à l'impact lors du choc, les moyens de limitation du recul sont sous la forme d'une structure de rigidification de ce point de fixation (3a) et/ou d'au moins un point de fixation additionnel associé à ce point de fixation (3a) et, quand il ne comprend pas de point de fixation disposé sur sa partie soumise en premier à l'impact lors du choc, les moyens de limitation du recul sont sous la forme d'au moins un point de fixation disposé sur cette partie, ce point de fixation présentant une structure de rigidification.

3. Elément de carrosserie (1) selon l'une quelconque des revendications précédentes, **caractérisé en ce que** le moyen de fixation supplémentaire (6) ou au moins un des moyens de fixation supplémentaires est disposé sur une partie longitudinale dudit élément, cette partie s'étendant entre l'avant et l'arrière de celui-ci.

4. Elément de carrosserie (1) selon la revendication précédente, **caractérisé en ce que** le moyen de fixation supplémentaire (6) ou au moins un des moyens de fixation supplémentaires est disposé sur le bord longitudinal supérieur dudit élément.

5. Elément de carrosserie (1) selon la revendication 3 ou 4, **caractérisé en ce que** le moyen de fixation supplémentaire (6) ou au moins un des moyens de fixation supplémentaires est disposé sur la partie d'un bord longitudinal dudit élément, cette partie étant éloignée de la zone d'impact.

6. Elément de carrosserie (1) selon l'une quelconque des revendications 1 à 5, **caractérisé en ce qu'**il est une aile d'un véhicule automobile.

7. Elément de carrosserie (1) selon la revendication précédente, **caractérisé en ce que** le moyen de fixation supplémentaire (6) ou au moins un des moyens de fixation supplémentaires relie cette aile (1) avec sa doublure d'aile (7) associée, cette dernière formant l'élément environnant solidaire de la carrosserie.

8. Elément de carrosserie (1) selon la revendication 6 ou 7, **caractérisé en ce que** ladite aile est une aile (1) avant de véhicule automobile, au moins le moyen de fixation supplémentaire (6) ou au moins un des moyens de fixation supplémentaires étant disposé sur son bord longitudinal supérieur en dessous du fenestron (5) de la porte avant (2) correspondante du véhicule automobile.

## Claims

1. A bodywork element (1) of a motor vehicle, connected to the said bodywork by at least one attachment point (3a, 3b or 3c), comprising means (6, 6a) of limiting the intrusion of this element (1) when the latter is subjected to a shock, the impact force of which is oriented substantially parallel to the longitudinal axis of the vehicle, the said means (6, 6a) being in the form of at least one supplementary attachment means (6) disposed in a non-shock zone of the element (1) and acted upon under shearing in the case of the shock, the said supplementary attachment means (6) or at least one of the supplementary attachment means comprises an attachment support (6), receiving attachment parts (6a), of the screw or rivet type and connecting the said element with a surrounding element of the bodywork, **characterized in that** these attachment parts (6a) can resist forces in the order of 2,000 N and **in that** the attachment support (6) is essentially in the form of an angle, each branch of the angle (6b or 6c) being applied respectively against the upper part and the lateral part of a surrounding element (7) integral with the bodywork.

2. The bodywork element (1) according to Claim 1, **characterized in that**, when it comprises an attachment point (3a), disposed on its part which is subjected first to the impact at the shock, the means of limiting the intrusion are in the form of a stiffening structure of this attachment point (3a) and/or of at least one additional attachment point associated with this attachment point (3a) and, when it does not comprise an attachment point disposed on its part which is subjected first to the impact at the shock, the means of limiting the intrusion are in the form of at least one attachment point disposed on this part, this attachment point having a stiffening structure.

3. The bodywork element (1) according to any one of the preceding claims, **characterized in that** the supplementary attachment means (6) or at least one of the supplementary attachment means is disposed on a longitudinal part of the said element, this part extending between the front and the rear thereof.

4. The bodywork element (1) according to the preceding claim, **characterized in that** the supplementary attachment means (6) or at least one of the supplementary attachment means is disposed on the longitudinal upper edge of the said element.

5. The bodywork element (1) according to Claim 3 or 4, **characterized in that** the supplementary attachment means (6) or at least one of the supplementary attachment means is disposed on the part of a longitudinal edge of the said element, this part being distant from the impact zone.

6. The bodywork element (1) according to any one of Claims 1 to 5, **characterized in that** it is a fender of a motor vehicle.

7. The bodywork element (1) according to the preceding claim, **characterized in that** the supplementary attachment means (6) or at least one of the supplementary attachment means connects this fender (1) with its associated fender skirt (7), the latter forming the surrounding element integral with the bodywork.

8. The bodywork element (1) according to Claim 6 or 7, **characterized in that** the said fender (1) is a front fender (1) of a motor vehicle, at least the supplementary attachment means (6) or at least one of the supplementary attachment means being disposed on its longitudinal upper edge beneath the quarterlight (5) of the corresponding front door (2) of the motor vehicle.

## Patentansprüche

1. Karosserieelement (1) eines Kraftfahrzeugs, das mit der Karosserie durch mindestens einen Befestigungspunkt (3a, 3b oder 3c) verbunden ist, das Begrenzungsmittel (6, 6a) des Rückstoßes dieses Elements (1) aufweist, wenn dieses einem Stoß ausgesetzt wird, dessen Aufprallkraft im Wesentlichen parallel zu der Längsachse des Fahrzeugs ausgerichtet ist, wobei die Mittel (6, 6a) die Form mindestens eines zusätzlichen Befestigungsmittels (6) haben, das im Bereich außerhalb des Stoßes des Elements (1) angeordnet ist und bei dem Aufprall scherbeansprucht wird, wobei das zusätzliche Befestigungsmittel (6) oder mindestens eines der zusätzlichen Befestigungsmittel einen Befestigungsträger (6) aufweist, der Befestigungsteile (6a) des Typs Schraube oder Nieten aufnimmt, die das Element mit einem Umgebungselement der Karosserie verbinden, **dadurch gekennzeichnet, dass** diese Befestigungsteile (6a) Kräften in der Größenordnung von 2.000 N standhalten können, und dass der Befestigungsträger (6) im Wesentlichen Winkelform hat, wobei je ein Schenkel (6b oder 6c) des Winkels jeweils gegen den oberen Teil und den seitlichen Teil eines Umgebungselements (7), das fest mit der Karosserie verbunden ist, angelegt ist.

2. Karosserieelement (1) nach Anspruch 1, **dadurch gekennzeichnet, dass**, wenn es einen Befestigungspunkt (3a) aufweist, der auf dem Teil angeordnet ist, der dem Aufprall bei dem Stoß zuerst ausgesetzt ist, die Begrenzungsmittel des Rückstoßes die Form einer Versteifungsstruktur dieses Befestigungspunkts (3a) und/oder mindestens eines zusätzlichen Befestigungspunkts, der mit diesem Befestigungspunkt (3a) verbunden ist, haben, und wenn es keinen Befestigungspunkt aufweist, der auf seinem Teil angeordnet ist, der dem Aufprall bei dem Stoß zuerst ausgesetzt ist, die Begrenzungsmittel des Rückstoßes die Form mindestens eines Befestigungspunkts haben, der auf diesem Teil angeordnet ist, wobei dieser Befestigungspunkt eine Versteifungsstruktur aufweist.

3. Karosserieelement (1) nach einem der vorhergehenden Ansprüche, **dadurch gekennzeichnet, dass** das zusätzliche Befestigungsmittel (6) oder mindestens eines der zusätzlichen Befestigungsmittel auf einem Längsteil des Elements angeordnet ist, wobei sich dieser Teil zwischen dessen Vorderseite und dessen Rückseite erstreckt.

4. Karosserieelement (1) nach dem vorhergehenden Anspruch, **dadurch gekennzeichnet, dass** das zusätzliche Befestigungsmittel (6) oder mindestens eines der zusätzlichen Befestigungsmittel auf dem oberen Längsrand des Elements angeordnet ist.

5. Karosserieelement (1) nach Anspruch 3 oder 4, **dadurch gekennzeichnet, dass** das zusätzliche Befestigungsmittel (6) oder mindestens eines der zusätzlichen Befestigungsmittel auf dem Teil eines Längsrands des Elements angeordnet ist, wobei dieser Teil von der Aufprallzone entfernt ist.

6. Karosserieelement (1) nach einem der Ansprüche 1 bis 5, **dadurch gekennzeichnet, dass** es ein Flügel eines Kraftfahrzeugs ist.

7. Karosserieelement (1) nach den vorhergehenden Ansprüchen, **dadurch gekennzeichnet, dass** das zusätzliche Befestigungsmittel (6) oder mindestens eines der zusätzlichen Befestigungsmittel diesen Flügel (1) mit seiner dazugehörenden Flügelauskleidung (7) verbindet, wobei diese Letztere das Umgebungselement, das fest mit der Karosserie verbunden ist, bildet.

8. Karosserieelement (1) nach Anspruch 6 oder 7, **dadurch gekennzeichnet, dass** der Flügel ein Vorderflügel (1) eines Kraftfahrzeugs ist, wobei mindestens das zusätzliche Befestigungsmittel (6) oder mindestens eines der zusätzlichen Befestigungsmittel auf seinem oberen Längsrand unterhalb des entsprechenden kleinen Fensters (5) der Vordertür (2) des Kraftfahrzeugs angeordnet ist.
